# EUROPÄISCHE PATENTSCHRIFT

(11) **EP 1 766 771 B1**
(45) Veröffentlichungstag und Bekanntmachung des Hinweises auf die Patenterteilung: **05.11.2008**
(21) Anmeldenummer: 05785642.9
(22) Anmeldetag: 11.07.2005
(51) Int. Cl.: H02P 7/28, H02P 7/295, H02P 7/292, H02M 5/25, H02M 7/155, H02M 7/515

(54) **EINE LÖSCHVORRICHTUNG FÜR EINE RÜCKSPEISENDE STROMRICHTERBRÜCKE**
QUENCHING DEVICE FOR A CONVERTER BRIDGE WITH LINE REGENERATION
DISPOSITIF D'EXTINCTION POUR PONT DE CONVERTISSEUR DE COURANT A RETOUR D'ALIMENTATION

(30) Priorität: 14.07.2004 AT 11992004
(43) Veröffentlichungstag der Anmeldung: 28.03.2007
(73) Patentinhaber: Siemens AG Österreich, 1210 Wien (AT)
(72) Erfinder: BIRIBAUER, Thomas, A-1220 Wien (AT); HACKL, Franz, A-1130 Wien (AT); HOFMÜLLER, Wilfried, A-2000 Stockerau (AT); PICHORNER, Heinz, 3464 Petendorf (AT); RITSCHEL, Wilhelm, A-1220 Wien (AT); WÖHRER, Franz, A-1220 Wien (AT)
(86) Internationale Anmeldenummer: PCT/EP2005/007492
(87) Internationale Veröffentlichungsnummer: WO 2006/005563

(56) Entgegenhaltungen:
- DE-A1- 3 030 186
- DE-A1- 19 539 573
- DE-A1- 19 543 702

## Beschreibung

Die Erfindung bezieht sich auf eine Löschvorrichtung für eine rückspeisende Stromrichterbrücke, wobei die von einer netzsynchronen Ansteuerschaltung mit Zündimpulsen angesteuerte Stromrichterbrücke mit ihren drei Eingängen an die Phasen eines Drehstromnetzes angeschlossen ist und die beiden Ausgänge der Brücke zu einem Gleichstrommotor geführt sind, welcher im generatorischen Betrieb über die Brücke in das Drehstromnetz rückspeist, und die Löschvorrichtung von einer Auslöseeinheit ansteuerbar ist, welche zur Abgabe von Auslöseimpulsen in Abhängigkeit von der Überwachung elektrischer und zeitlicher Größen eingerichtet ist.

Bei netzgeführten Stromrichtern, wie sie z. B. in der AT 404 414 B der Anmelderin beschrieben sind, können Störungen im Spannungs- oder Stromverlauf, insbesondere Überspannungen und/oder Kommutierungsfehler zu einer Zerstörung der teuren Thyristoren bzw. Schalter einer solchen Brücke führen.

Genauer gesagt tritt bei netzgeführten Stromrichtern das grundsätzliche Problem des Wechselrichterkippens im rückspeisenden Betrieb auf. Dabei entsteht bei Netzspannungseinbruch und hinreichender Gleichspannung, z. B. einer entsprechenden Ankerspannung des Motors, ein Überstrom, der weiter zunimmt und auch nicht mehr durch den Stromrichter selbst zu löschen ist. Es kommt dann zwangsläufig zu einem Ansprechen der in der Regel vorgesehenen Sicherungen, welche die Thyristoren schützen sollen. Die Folge ist ein längerer Ausfall des Stromrichters und des davon gespeisten Motors, da es einer entsprechenden Zeit bedarf, um die Sicherungen, die üblicherweise als schnelle Halbleitersicherungen ausgebildet sind, auszutauschen. Man war daher bemüht, verschiedene, zum Teil aufwändige Vorrichtungen zur Begrenzung und Unterbrechung des Überstroms zu schaffen bzw. um ein Wechselrichterkippen entweder zu verhindern oder kontrolliert zu beenden, wie z. B. in dem genannten Patent der Anmelderin beschrieben.

Bekannt sind beispielsweise Gleichstrom-Schnellschalter, die in dem Gleichstrompfad liegen. Wenn deren sichere Funktion gewährleistet werden soll, sind jedoch zusätzlich hoch aussteuerbare Drosseln zur Begrenzung des Stromanstiegs erforderlich und dementsprechend sind die Kosten beträchtlich, abgesehen von der problematischen Dimensionierung und einer für die sichere Funktion regelmäßigen Wartung.

Es sind noch andere Verfahren zur direkten Thyristorlöschung mit Löschkondensatoren bekannt, beispielsweise die Löschung nur einer der beiden Stromrichter-Brückenhälften mit einem Kondensator, wobei der Motorstrom bis zum völligen Abbau auf Null die Ventile der zweiten Brückenhälfte noch voll belastet und dadurch nicht in allen Fällen Schutz möglich ist. Ein ähnliches Verfahren ist die Löschung beider Brückenhälften mit zwei Kondensatoren und mit je einer Spannungsbegrenzung parallel zu diesen, was jedoch Überspannungen am Motor zulässt. Die genannten Verfahren schützen außerdem nicht vor einer Überspannung bei einer Netzunterbrechung, falls zwischen Netz und Stromrichterbrücke ein Transformator liegt.

Das Dokument DE 19539573 beschreibt einen Summenlöschkreis für Thyristorstromrichter mit einem speziellen Freilaufzweig zur Vermeidung von Überspannungen.

Eine Aufgabe der Erfindung liegt darin, eine Löschvorrichtung zu schaffen, die in der Lage ist, die Thyristoren eines rückspeisenden Stromrichters so schnell zu löschen, dass die den Thyristoren einzeln oder dem Stromrichter insgesamt vorgeschalteten Halbleitersicherungen im Falle insbesondere eines Wechselrichterkippens vor Schmelzen oder Vorschädigung (Alterung) geschützt werden. Sofern Sicherungen vorliegen, soll deren Schmelzintegral (i²t) nicht erreicht werden, bei sicherungslosem Betrieb darf das Grenzlastintegral (i²t) der Thyristoren nicht erreicht werden. Überdies soll die Löschvorrichtung den Stromrichter vor Überspannungen schützen, wie sie insbesondere bei Netzunterbrechungen, vor allem bei Betrieb mit einem Transformator, auftreten und die oft die Ursache für Kommutierungsfehler sind und in Folge zur Zerstörung der Thyristoren führen.

Diese Aufgabe wird mit einer Löschvorrichung der eingangs genannten Art gelöst, bei welcher gemäß Anspruch 1 die Löschvorrichtung für jede Brückenhälfte einen von einer Ladeschaltung auf eine definierte Löschspannung aufladbaren Löschkondensator besitzt, und die Löschkondensatoren im Löschfall mit Hilfe von der Auslöseeinheit angesteuerter Schalter an die Brückenhälften schaltbar sind.

Bei einer vorteilhaften Ausführungsform ist vorgesehen, dass in den Verbindungen der Löschkondensatoren mit den an den Netzphasen liegenden Brückenpunkten zusätzlich zu gesteuerten Schaltern Dioden in sechspulsiger Brückenschaltung liegen. Dabei können die Löschkondensatoren über die Dioden und zuschaltbare Widerstände aufladbar sein. Auf diese Weise wird ohne großen zusätzlichen Aufwand das Laden der Löschkondensatoren möglich.

Weiters ist zweckmäßigerweise vorgesehen, dass in der Verbindung der Löschvorrichtung mit den gleichspannungsseitigen Brückenpunkten Kommutierungsdrosseln liegen, welche die Stromanstiegsgeschwindigkeit beim Kommutierungsvorgang begrenzen.

Es ist auch zweckmäßig, wenn die Löschvorrichtung zur Spannungsbegrenzung einen Schutzkondensator aufweist, dem ein Spannungsbegrenzer parallelgeschaltet ist, wobei der Löschkondensator über gesteuerte Schalter an den Gleichspannungsausgang der Brücke schaltbar ist. Damit wird sichergestellt, dass die Komponenten der Löschvorrichtung selbst und der Motor vor unzulässigen Überspannungen geschützt werden.

Dabei kann der Schutzkondensator über eine Brückenschaltung aus gesteuerten Schaltern wahlweise so an den Gleichspannungsausgang der Stromrichterbrücke schaltbar sein, dass unabhängig von der Polarität des Gleichspannungsausgangs bzw. der Motorklemmenspannung die Polarität am Schutzkondensator und Spannungsbegrenzer gleich bleibt.

Bei einer vorteilhaften Ausführungsform ist der Spannungsbegrenzer als Widerstandchopper ausgebildet, d. h. es wird ein Ballastwiderstand der benötigten Energie-Vernichtungsrate entsprechend immer wieder zu- bzw. abgeschaltet.

Wenn der Schutzkondensator über zwei Dioden ständig an die Gleichspannungsseite der sechs in Brückenschaltung liegenden Dioden angeschlossen ist, können auch alle von Netz kommenden Überspannungen begrenzt werden.

Sinnvoll ist es weiters, wenn die Wechselspannungspunkte der Stromrichterbrücke mit den Eingängen der sechs in Brückenschaltung liegenden Dioden über Induktivitäten verbunden sind. Solche Induktivitäten, die entweder von Luftspulen oder von parasitären (Leitungs-) Induktivitäten gebildet sein können, verhindern zu rasche Anstiege der Ströme, welche die Brückenschalter gefährden könnten.

Die Löschvorrichtung eignet sich besonders, wenn die Stromrichter Thyristoren sind.

Die Erfindung samt weiterer Vorteile ist im Folgenden anhand einer beispielsweisen Ausführungsform näher erläutert, die in der Zeichnung veranschaulicht ist. Diese zeigt in einem schematischen Blockschaltbild eine von einer Ansteuerschaltung angesteuerte Stromrichterbrücke zur Versorgung eines Gleichstrommotors samt einer Löschvorrichtung nach der Erfindung mit einer zugehörigen Auslöseeinrichtung.

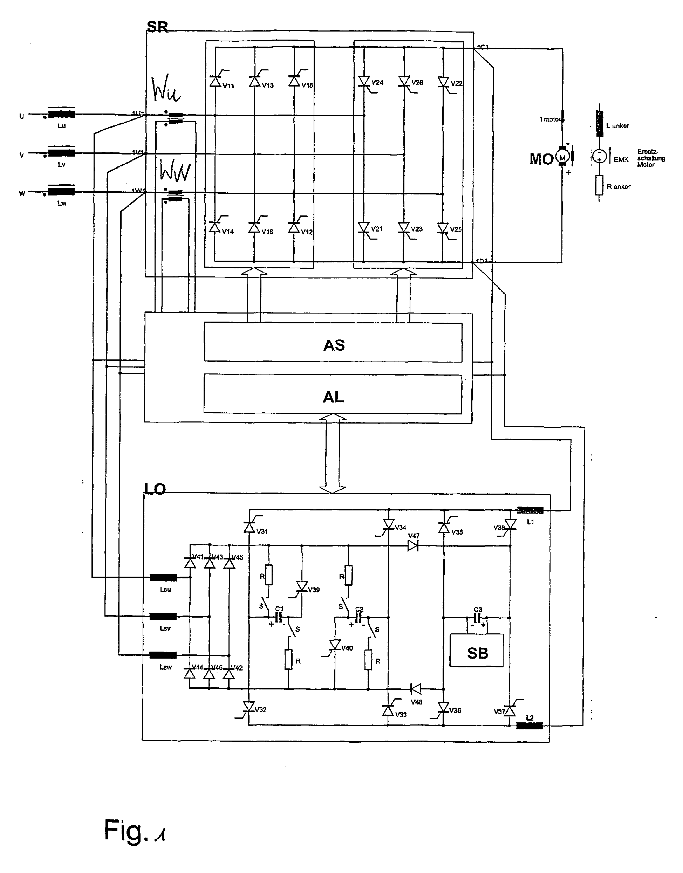

Wie der Zeichnung entnehmbar, sind die drei Phasen U, V, W eines Drehstromnetzes über Kommutierungsdrosseln Lu, Lv, Lw an die Drehstromseite einer Stromrichterbrücke SRB angeschlossen. Dabei liegt üblicherweise in jeder Phase eine in der Zeichnung nicht gezeigte Netzsicherung, wie z. B. in der AT 404 414 B im Zusammenhang mit ihrer Fig. 2 beschrieben.

Die gesteuerten Gleichrichterschalter V11, ..., V16 und V21, ..., V26 sind als Thyristoren oder vergleichbare Bauelemente ausgebildet.

Für beide Brücken ist eine Ansteuervorrichtung AST vorgesehen, die für ein netzsynchrones Zünden der Thyristoren sorgt. Durch Verschieben der Zündzeitpunkte kann in bekannter Weise eine Drehzahl- bzw. Momentenregelung erfolgen. Der Ansteuerschaltung AST werden die drei Phasenspannungen des Netzes und die Motorklemmenspannung sowie über zwei Stromwandler W_{U}, W_{W} die Phasenströme zugeführt, damit entsprechende Informationen für die Regelung und für die Ansteuerung der Stromrichterbrücke vorliegen.

Die beiden Gleichstromklemmen 1C1, 1D1 der Brücke SRB sind zu einem Gleichstrommotor MOT geführt, der im generatorischen Betrieb über die Brücke bestehend aus den Schaltern V11, ..., V16 in das Drehstromnetz rückspeist. Hier ist anzumerken, dass im Zusammenhang mit der Erfindung lediglich der generatorische Betrieb (Energiefluss ins Netz) von Interesse ist. Auch die andere Brücke V21, ..., V26 kann rückspeisend arbeiten, wenn die Motor-EMK umgekehrt anliegt (erfordert umgekehrte Drehrichtung). Der Einfachheit halber wird hier nun der Fall betrachtet, dass die Brücke bestehend aus den Schaltern V11, ..., V16 soeben rückspeisend ist. In der soeben einspeisenden Brücke, gleich welche das gerade auch ist, kann kein Problem entstehen, das ein Eingreifen im Sinne des Löschens erfordert. Konkret erfolgt bei einem Netzspannungseinbruch in einer einspeisenden Brücke ein Rückgang des Stromes. Für das weitere Verständnis soll daran erinnert werden, dass die Ersatzschaltung als Serienschaltung der Motor-EMK, der Ankerinduktivität Lₐₙₖₑᵣ und des Ankerwiderstandes Rₐₙₖₑᵣ dargestellt werden kann. Der Ausgangsstrom der Brücke SRB entspricht dem eingezeichneten Motorstrom Iₐₙₖₑᵣ.

Die im Sinne der Erfindung ausgebildete und wirkende Löschvorrichtung LOV besitzt für jede Brückenhälfte V11, V13, V15 bzw. V14, V16, V12 (bei umgekehrter EMK für V21, V23, V25 bzw. V24, V26, V22)einen Löschkondensator C1 bzw. C2, von welcher jeder, wie weiter unten noch zu beschreiben ist, auf die eingezeichnete Polarität aufgeladen wird. Der Pluspol bzw. der Minuspol der Kondensatoren C1 und C2 ist in der dargestellten Weise über Thyristoren V31, V32 und V34, V33 mit den Gleichspannungsanschlüssen 1C1 und 1D1 der Stromrichterbrücke SRB verbunden, im vorliegenden Fall über Kommutierungsdrosseln L1, L2. Der Minuspol von C1 bzw. der Pluspol von C2 ist über einen Thyristor V39 und drei Dioden V41, V43, V45 bzw. über einen Thyristor V40 und drei Dioden V44, V46, V42:mit den Wechselstromanschlüssen 1U1, 1V1, 1W1 der Stromrichterbrücke SRB verbunden. In den Verbindungen eingezeichnete Drosseln L_{SU}, L_{SV}, L_{SW} begrenzen den Stromanstieg, ;es kann sich um Luftspulen oder parasitäre (Leitungs)induktivitäten handeln.

Die Löschvorrichtung nach der Erfindung weist weiters einen Schutzkondensator C3 auf, dem ein Spannungsbegrenzer SBG parallel geschaltet ist. Der Minuspol des Schutzkondensators C3 ist über die Thyristoren V35, V36 und der Pluspol über die Thyristoren V38, V37 mit den Gleichspannungsklemmen 1C1, 1D1 der Brücke SRB verbunden. Anzumerken ist, dassim Gegensatz zu den Löschkondensatoren C1, C2 - der Schutzkondensator C3 immer mit einer Spannung derselben Polarität beaufschlagt ist und dass die Thyristoren V35, ..., V38 auch durch Dioden ersetzt werden können, falls die Summe der Ladespannungen von C1 und C2 kleiner als die Vorspannung von C3 ist.

Die Gleichspannungsseite der in einer Brückenschaltung angeordneten Dioden V41, ..., V46 ist über Dioden V47 bzw. V48 mit dem Eingang des Spannungsbegrenzers SBG und mit dem Schutzkondensator C3 verbunden. Sie ermöglichen im Verlauf des Löschvorganges den Stromabbau in den Kommutierungsdrosseln einerseits und im Normalbetrieb der Stromrichterbrücken (motorisch und generatorisch) das Übernehmen von transienten Überspannungen aus dem Netz und von Kommutierungs-Spannungsspitzen vom Stromrichter selbst.

Im Folgenden soll zunächst der Löschvorgang (für die in der Zeichnung angegebene,Polung der Motor-EMK) erläutert werden, wobei gemäß der Zeichnung geladene Löschkondensatoren C1, C2 vorausgesetzt werden. Deren Laden wird weiter unten erläutert.

Bei Zündung der Lösch-Tyhristoren V31, V33 und V39, V40 durch die Auslöseeinheit ALE kommutieren die Ströme sowohl von der oberen Halbbrücke V11, V13, V15 in den Kondensator C1, als auch von der unteren Halbbrücke V14, V16, V12 in den Kondensator C2, wodurch alle Ströme im rückspeisenden Stromrichter V11, ..., V16 sofort gelöscht werden. Gleichzeitig mit der Abgabe der Löschimpulse (Zündimpulse für die Lösch-Thyristoren) werden auch die Zündimpulse für die Brücke SRB gesperrt.

Die Spannungen an den Kondensatoren C1, C2 schwingen durch den Motorstrom um, bis dieser über die kurz vorher gezündeten Thyristoren V35 und V37 in den am Spannungsbegrenzer SBG liegenden Kondensator C3 kommutiert. Falls die Spannung an C3 noch nicht den Begrenzungspegel des Begrenzers SGB erreicht hat, wird er durch den Motorstrom dahin aufgeladen. Anzumerken ist hier, dass durch die Thyristoren V32, V34, V36 und V38 Ströme nur bei umgekehrter Motor-EMK fließen.

Im Folgenden wird noch näher auf den Spannungsbegrenzer SBG und dessen Funktion eingegangen, wobei vorausgesetzt werden soll, dass die Motorspannung (Spannung an den Motor- bzw. Geräteklemmen) durch den Löschvorgang kurzzeitig, etwa 1ms, umgepolt wird. Ist die ursprüngliche Motorspannung wieder erreicht, so ist der Motorstrom gegenüber seinem Anfangswert zum Löschzeitpunkt leicht gestiegen. Der Strom in der Ankerinduktivität des Motors wird erst durch eine höhere Spannung bis auf Null abgebaut und dieses Spannung muss durch den Spannungsbegrenzer SBG im Sinne einer Begrenzung auf einen Maximalwert geregelt werden.

Die Begrenzung erfolgt in bekannter Weise durch gesteuertes Anschalten von Ballastwiderständen an die Eingangsklemmen des Begrenzers SBG und somit an den Schutzkondensator C3. Die Ballastwiderstände werden je nach Spannungshöhe in unterschiedlichem Takt zugeschaltet, wobei elektrische Energie in Wärmeenergie umgewandelt wird. De facto liegt z. B. ein Zweipunktregler mit etwa 10 % Hysteresis vor, der die Ballastwiderstände ein- und abschaltet. Um eine höhere Summen-Löschspannung zu ermöglichen, kann der spannungsbegrenzer SBG erst während des Umschwingens der Kondensatoren C1, C2 über die Thyristoren V35, ..., V38 zugeschaltet werden. Es könnten hier auch vier Dioden verwendet werden, aber da diese notwendigerweise einen Brückengleichrichter mit C3 bilden, würde die genannte Summen-Löschspannung am Anfang Gleichrichtung den Wert der momentanen Spannung von C3 überschreiten und einen erheblichen (unbegrenzten / schädigenden Stromstoß) verursachen. Deshalb erfolgt der Einsatz von vier Thyristoren, die etwa zum Zeitpunkt des Nulldurchganges der Kondensatorspannungen C1 und C2 gezündet werden. Dann ist nämlich die Gefährdung nicht mehr gegeben, weil der Motorstrom, der wie schon oben beschrieben in den Begrenzer kommutiert, vorgegeben (bzw. eingeprägt oder quasi konstant) ist. Der als Schutzkondensator bezeichnete Kondensator C3 könnte bei Verwendung eines anderen Begrenzers SBG auch entfallen, wobei hier z. B. spannungsabhängige Widerstände oder Zenerdioden in Frage kämen.

Der Spannungsbegrenzer SBG ist jedoch ständig über die bereits genannten Dioden V47, V48 an die Diodenbrücke V41, ..., V46 angeschlossen. Dies ermöglicht es, dass auch sämtliche von dem Netz kommende Überspannungen begrenzt werden. Beispielsweise können erhebliche Überspannungen bei Abschalten eines vorgeschalteten Transformators unter Last auftreten. Darauf wird weiter unten noch näher eingegangen.

Um an den genannten Widerständen des Spannungsbegrenzers SBG eine Dauerverlustleistung zu vermeiden, kann dieser einen weiteren Schalter mit einer etwas tieferen Spannungsschwelle aufweisen, bei welchem die angetakteten ("gechoppten") Widerstände bzw. ein Widerstand einen wesentlich höheren Widerstandswert besitzen bzw. besitzt, als die genannten Werte des Spannungsbegrenzers.

Dazu sei bemerkt, dass z. B. bei einer praktischen Ausführungsform der gechoppte Widerstand effektiv 250 mOhm besitzt. Die Realisierung erfolgt parallel durch vier IGBT-Schalter und vier Widerstände mit je 1 Ohm. Durch jeden Widerstand fließt im Begrenzungsfall ein Strom von 900 A.

Die beiden Löschkondensatoren C1, C2 müssen auf einen Teil - typischerweise 0,5 bis 0,9 - des Scheitelwerts der verketteten Netzspannung geladen werden. Die beiden Kondensatoren C1 und C2 sind nach einem Löschvorgang umgekehrt geladen. Durch die nachfolgend beschriebene Schaltung erfolgt also strenggenommen zuerst eine Entladung bis Null und erst danach eine Aufladung. Es ist für das Prinzip der Erfindung gleichgültig, auf welche Weise das Laden der beiden Kondensatoren erfolgt, doch wird im folgenden eine praxisbewährte Möglichkeit einer Ladeschaltung, integriert in die gesamte Schaltung der Löschvorrichtung - beschrieben. Diese weist für jeden Kondensator C1 bzw. C2 zwei Ladewiderstände R1, R2 bzw. R3, R4 auf, die zum Pluspol - R1, R3 - bzw. zum Minuspol - R2, R4 -der Brückenschaltung V41..V46 führen. Schalter, S1, S2, für C1 und S3, S4 für C2, die in Serie mit den Ladewiderständen R1, R2 und R3, R4 liegen, werden von einem nicht gezeigten Zweipunktregler gesteuert. Das Laden ist nur möglich, wenn die Löschthyristoren ausgeschaltet sind. Im übrigen wird bei dieser Schaltung dadurch eine doppelte Spannungsbelastung der Thyristoren V31 und V33, bzw. V32 und V34 vermieden.

Im Löschfall, müssen unmittelbar nach der Zündung der Löschthyristoren während des Umschwingens der Spannungen an den Löschkondensatoren C1 und C2 diese von der Ladeschaltung durch die vorhin genannten Halbleiterschalter S1 .. S4 getrennt werden, um zu verhindern, dass die Löschthyristoren nach dem erfolgreichen Stromabbau durch den Ladestrom leitend bleiben. Dadurch würde nämlich ein weiterer Ladevorgang verhindert werden und es käme folglich zu einer Überlastung der Ladewiderstände R1, ..., R4. Sobald die Kondensatoren C1 und C2 wieder hinreichend geladen sind, kann ein neuer Löschvorgang erfolgen, wobei jedoch die Wiederholfrequenz von Löschvorgängen bzw. die Anzahl von Löschvorgängen innerhalb eines bestimmten Zeitraumes durch die Dimensionierung der Schaltung, insbesondere der Ladewiderstände und des Spannungsbegrenzers bestimmt wird.

Die Steuerung der gesamten Schaltung, die nicht unmittelbar Gegenstand der Erfind.ung ist, kann durch eine analoge Schaltung mit Mikroprozessor-Unterstützung zur Kommunikation mit dem Stromrichter erfolgen. Die Auslösekriterien für die Ansteuerung der Löschthyristoren werden an Hand gemessener Spannungen und Ströme und/oder Zeiten durch die Software ermittelt. Auch wenn diese, wie gesagt, nicht Gegenstand der Erfindung ist, seien einige Beispiele von Betriebs(Fehl)zuständen gegeben, welche durch die erfindungsgemäße Löschvorrichtung beherrscht werden.

Bei Blitzeinschlägen in Hoch- oder Mittelspannungseinrichtungen werden Schutzfunkenstrecken oder gasgefüllte Überspannungs-Schutzelemente gezündet. Diese brennen dann bis zum nächsten Strom-Nulldurchgang. Dadurch entsteht ein niederohmiger Netzspannungseinbruch mit der Dauer von 3 bis 20 ms. Es kann aber auch zu einem längeren Ausfall der Netzspannung kommen, bei dem ein oder mehrere Transformatoren oder sonstige Verbraucher das Netz niederohmig auf Null halten.

Bei einem Kurzschluss an einem parallelen Stromkreis am gleichen Netz entsteht zuerst ein Netzspannungs-Einbruch. Daraufhin schmilzt die zugeordnete Sicherung und trennt den fehlerhaften Stromkreis vom Netz. Es erfolgt auf diese Weise danach ein kurzer Überspannungs-Impuls, wobei die Dauer und Stärke des Einbruchs von der Netzimpedanz und dem Fehlerstrom abhängen.

Weitere Möglichkeiten für niederohmige Netzeinbrüche sind alle Arten von Kurzschlüssen am speisenden Netz.

Bei den genannten Beispielen, die alle niederohmige Netzeinbrüche betreffen, und bei gleichzeitiger Rückspeisung über den Stromrichter in das selbe Netz, steigt der Motorstrom sofort entsprechend der EMK und der Ankerinduktivität plus Netzimpedanz an, bis die Auslöseeinheit die Löscheinrichtung zum Abschalten auffordert. Die durchschnittliche Abschaltzeit, d. h. die Zeit bis der Motorstrom auf Null gesunken ist, beträgt etwa 5 ms. Allfällige Überspannungsspitzen bei Netzwiederkehr werden wie oben beschrieben begrenzt.

Bei dem Abschalten eines Hauptschützes direkt vor dem Stromrichter müssen sich die Kommutierungsinduktivitäten und die Ankerinduktivität entladen können. Dies wird durch die immer im Eingriff befindliche Netzspannungsbegrenzung wie vorhin beschrieben erreicht. Es kommt dabei zu keinem Wechselrichterkippen, ohne einen solchen Überspannungsschutz aber meistens zu einem Querzünden. Der Abbau der Energie findet hauptsächlich in dem Hauptschütz statt, was jedoch allein schon wegen der Kontaktabnutzung zu vermeiden ist.

Bei dem Abschalten eines speisenden Transformators, z. B. auf Mittelspannungsebene, tritt durch den höheren Innenwiderstand des Netzes keine signifikante Stromerhöhung (beim Wechselrichterkippen) auf. Bestimmte Thyristoren im Stromrichter löschen jedoch nicht mehr und ein Querzünder ist die Folge. Diese Bedingung wird gleichfalls rechtzeitig erkannt und die Löschvorrichtung veranlasst ein Abschalten des Stroms. Allfällige Überspannungen durch das Entrnagnetisieren des genannten Transformators werden wiederum durch die Löschvorrichtung (Diodenbrücke V41, ..., V46 über V47, V48 an C3 parallel zum Spannungsbegrenzer) begrenzt.

## Patentansprüche

1. Löschvorrichtung (LOV) für eine rückspeisende Stromrichterbrücke (SRB),
wobei die von einer netzsynchronen Ansteuerschaltung (AST) mit Zündimpulsen angesteuerte Stromrichterbrücke mit ihren drei Eingängen (1U1,1V1,1W1) an die Phasen (U, V, W) eines Drehstromnetzes angeschlossen ist und die beiden Ausgänge (1C1,1D1) der Brücke zu einem Gleichstrommotor (MOT) geführt sind, welcher im generatorischen Betrieb über die Brücke in das Drehstromnetz rückspeist,
und die Löschvorrichtung von einer Auslöseeinheit (ALE) ansteuerbar ist, welche zur Abgabe von Auslöseimpulsen in Abhängigkeit von der Überwachung elektrischer und zeitlicher Größen eingerichtet ist,
**dadurch gekennzeichnet, dass**
die Löschvorrichtung (LOV) für jede Brückenhälfte (V11, V13, V15; V21, V23, V25 bzw. V14, V16, V12; V24, V26, V22) einen von einer Ladeschaltung (R1, S1, R2, S2 bzw. R3, S3, R4, S4) auf eine definierte Löschspannung aufladbaren Löschkondensator (C1 bzw. C2) besitzt, und die Löschkondensatoren (C1, C2) im Löschfall mit Hilfe von der Auslöseeinheit (ALE) angesteuerter Schalter (V31, V32, V39 bzw. V34, V33, V40) über Dioden (V41, V43, V45; V44, V46,V42) in sechspoliger Brückenschaltung an die Brückenhälften schaltbar sind und dass die Löschvorrichtung (LOV) zur Spannungsbegrenzung einen Schutzkondensator (C3) aufweist, dem ein Spannungsbegrenzer (SBG) parallel geschaltet ist, wobei der Schutzkondensator (C3) über gesteuerte Schalter (V35, V37 bzw. V36, V38) an die Ausgänge (1C1, 1D1) der Brücke schaltbar ist und dass des Weiteren der Schutzkondensator (C3) über zwei Dioden (V47, V48) ständig an die Gleichspannungsseite der sechs in Brückenschaltung liegenden Dioden (V41, V43, V45; V44, V46,V42) angeschlossen ist.

2. Löschvorrichtung (LOV) nach Anspruch 1, **dadurch gekennzeichnet, dass** die Löschkondensatoren (C1, C2) über die Dioden (V41, ..., V46) sowie zuschaltbare Widerstände (R1, ..., R4) aufladbar sind.

3. Löschvorrichtung (LOV) nach einem der Ansprüche 1 bis 2, **dadurch gekennzeichnet, dass** in der Verbindung der Löschvorrichtung (C1, C2) mit den gleichspannungsseitigen Brückenpunkten Kommutierungsdrosseln (L1, L2) liegen.

4. Löschvorrichtung (LOV) nach einem der Ansprüche 1 bis 3, **dadurch gekennzeichnet, dass** der Schutzkondensator (C3) über eine Brückenschaltung aus gesteuerten Schaltern (V35, ..., V38) wahlweise so an den Gleichspannungsausgang der Stromrichterbrücke (1C1, 1D1) schaltbar ist, dass unabhängig von der Polarität des Gleichspannungsausgangs bzw. der Motorklemmenspannung die Polarität am Schutzkondensator (C3) und Spannungsbegrenzer (SBG) gleich bleibt.

5. Löschvorrichtung (LOV) nach einem der Ansprüche 1 bis 4, **dadurch gekennzeichnet, dass** der Spannungsbegrenzer (SBG) als Widerstandschopper ausgebildet ist.

6. Löschvorrichtung (LOV) nach einem der Ansprüche 1 bis 5, **dadurch gekennzeichnet, dass** die Wechselspannungspunkte der Stromrichterbrücke (V11, ..., V16, V21, ..., V26) mit den Eingängen der sechs in Brückenschaltung liegenden Dioden (V41, ..., V46) über Induktivitäten (L_{SU}, L_{SV}, L_{SW}) verbunden sind.

7. Löschvorrichtung (LOV) nach Anspruch 6, **dadurch gekennzeichnet, dass** die Induktivitäten (L_{SU}, L_{SV}, L_{SW}) von Luftspulen oder parasitären Induktivitäten gebildet sind.

8. Löschvorrichtung (LOV) nach einem der Ansprüche 1 bis 7, **dadurch gekennzeichnet, dass** die Stromrichter Thyristoren (V11, ..., V16, V21, ..., V26) sind.

## Claims

1. Quenching device (LOV) for a converter bridge (SRB) with line regeneration,
with the converter bridge actuated with ignition pulses by a synchronous actuation circuit (AST) being connected with its three inputs (1U1, 1V1, 1W1) to the phases (U, V, W) of a three-phase network and the two outputs (1C1, 1D1) of the bridge being conveyed to a direct current motor (MOT), which regenerates the line into the three-phase system via the bridge during regenerative operation,
and the quenching device being actuatable by a trigger unit (ALE), which is set to output trigger pulses as a function of the monitoring of electrical and temporal variables,
**characterised in that**
the quenching device (LOV) has a quenching capacitor (C1 and/or C2) which can be charged to a defined quenching voltage for each bridge half (V11, V13, V15; V21, V23, V25 and/or V14, V16, V12; V24, V26, V22) by a charging circuit (R1, S1, R2, S2 and/or R3, S3, R4, S4) and the quenching capacitors (C1, C2) can be connected to the bridge halves in the event of quenching with the aid of the trigger unit (ALE) of actuated switches (V31, V32, V39 and/or V34, V33, V40) via diodes (V41, V43, V45; V44, V46, V42) in a six-pole bridge circuit and that the quenching device (LOV) has a protective capacitor (C3) for voltage limitation purposes, to which a voltage limiter (SBG) is connected in parallel, with the protective capacitor (C3) being connectable to the outputs (1C1, 1D1) of the bridge via controlled switches (V35, V37 and/or V36, V38) and that the protective capacitor (C3) is also permanently connected to the direct voltage side of the six diodes (V41, V43, V45; V44, V46, V42) disposed in the bridge circuit.

2. Quenching device (LOV) according to claim 1, **characterised in that** the quenching capacitors (C1, C2) can be charged via the diodes (V41, ..., V46) as well as connectable resistors (R1,..., R4).

3. Quenching device (LOV) according to one of claims 1 to 2, **characterised in that** commutating chokes (L1, L2) are arranged in the connection between the quenching device (C1, C2) and the bridge points arranged on the direct voltage side.

4. Quenching device (LOV) according to one of claims 1 to 3, **characterised in that** the protective capacitor (C3) can optionally be connected to the direct voltage output of the converter bridge (IC1, 1D1) via a bridging circuit composed of controlled switches (V35, ..., V38) such that the polarity at the protective capacitor (C3) and voltage limiter (SBG) remains the same irrespective of the polarity of the direct voltage output and/or motor terminal voltage.

5. Quenching device (LOV) according to one of claims 1 to 4, **characterised in that** the voltage limiter (SBG) is embodied as a resistor chopper.

6. Quenching device (LOV) according to one of claims 1 to 5, **characterized in that** the alternating voltage points of the converter bridge (V11, ..., V16, V21, ..., V26) are connected to the inputs of the six diodes (V41,..., V46) arranged in the bridge circuit via inductors *(*L*_{SU},* L*_{SV}*, L*_{SW}*).

7. Quenching device (LOV) according to claim 6,
**characterised in that** the inductors (L*_{SU}*,L*_{SV}*,L*_{SW}*) are formed of air-core coils or parasitic inductors.

8. Quenching device (LOV) according to one of claims 1 to 7, **characterised in that** the converters are thyristors (V11, ..., V16, V21, ..., V26).

## Revendications

1. Dispositif d'extinction (LOV) pour un pont convertisseur de courant à retour d'alimentation (SRB),
le pont de convertisseur de courant activé par un circuit d'activation (AST) synchrone avec le réseau avec des impulsions d'allumage étant raccordé par ses trois entrées (1U1, 1V1, 1W1) aux phases (U, V, W) d'un réseau triphasé et les deux sorties (1C1, 1D1) du pont étant guidées vers un moteur à courant continu (MOT), qui retourne l'alimentation pendant le fonctionnement du générateur via le pont dans le réseau triphasé,
et le dispositif d'extinction pouvant être activé par une unité de déclenchement (ALE) qui est aménagée pour délivrer des impulsions de déclenchement en fonction du contrôle de grandeurs électriques et de grandeurs temporelles,
**caractérisé en ce que**
le dispositif d'extinction (LOV) présente pour chaque moitié de pont (V11, V13, V15 ; V21, V23, V25 resp. V14, V16, V12 ; V24, V26, V22) un condensateur d'extinction (C1 resp. C2) pouvant être chargé par un circuit de chargement (R1, S1, R2, S2 resp. R2, S3, R4, S4) jusqu'à une tension d'extinction définie et les condensateurs d'extinction (C1, C2) pouvant être commutés en cas d'extinction à l'aide d'interrupteurs (V31, V32, V39 resp. V34, V33, V40), activés par l'unité de déclenchement (ALE) par des diodes (V41, V43, V45 ; V44, V46, V42) dans le circuit en pont à six broches sur les moitiés de pont et **en ce que** le dispositif d'extinction (LOV) présente pour la limitation de la tension un condensateur de protection (C3), parallèlement auquel un limiteur de tension (SBG) est monté, le condensateur de protection (C3) pouvant être commuté par des interrupteurs (V35, V37 resp. V36, V38) commandés sur les sorties (1C1, 1D1) du pont et **en ce que**, d'autre part, le condensateur de protection (C3) est raccordé au moyen de deux diodes (V47, V48) constamment au côté de tension continue des six diodes (V41, V43, V45 ; V44, V46, V42) situées dans le circuit en pont.

2. Dispositif d'extinction (LOV) selon la revendication 1, **caractérisé en ce que** les condensateurs d'extinction (C1, C2) peuvent être chargés au moyen des diodes (V41, ..., V46) ainsi que de résistances (R1, ..., R4) pouvant être mises en circuit.

3. Dispositif d'extinction (LOV) selon l'une quelconque des revendications 1 à 2, **caractérisé en ce que** des dispositifs d'étranglement de commutation (L1, L2) sont disposés dans la liaison du dispositif d'extinction (C1, C2) avec les points de pont côté tension continue.

4. Dispositif d'extinction (LOV) selon l'une quelconque des revendications 1 à 3, **caractérisé en ce que** le condensateur de protection (C3) peut être commuté par un circuit en pont constitué d'interrupteurs (V35, ..., V38) commandés au choix sur la sortie de tension continue du pont convertisseur de courant (1C1, 1D1), **en ce que** la polarité sur le condensateur de protection (C3) et sur le limiteur de tension (SBG) reste identique indépendamment de la polarité de la sortie de tension continue resp. de la tension aux bornes du moteur.

5. Dispositif d'extinction (LOV) selon l'une quelconque des revendications 1 à 4, **caractérisé en ce que** le limiteur de tension (SBG) est réalisé sous forme de hacheur de résistance.

6. Dispositif d'extinction (LOV) selon l'une quelconque des revendications 1 à 5, **caractérisé en ce que** les points de tension alternative du pont convertisseur de courant (V11, ..., V16, V21, ..., V26) sont reliés par des inductances (L_{SU}, L_{SV}, L_{sw}) aux entrées des six diodes (V41, ..., V46) situées dans le circuit en pont.

7. Dispositif d'extinction (LOV) selon la revendication 6, **caractérisé en ce que** les inductances (L_{SU}, L_{SV}, L_{SW}) sont formés par des bobines à air ou des inductances parasitaires.

8. Dispositif d'extinction (LOV) selon l'une quelconque des revendications 1 à 7, **caractérisé en ce que** les convertisseurs de courant sont des thyristors (V11, ..., V16, V21, ..., V26).
